# DEMANDE DE BREVET EUROPEEN

(11) **EP 3 713 055 A1**
(43) Date de publication de la demande: **23.09.2020**
(21) Numéro de dépôt: 20161230.6
(22) Date de dépôt: 05.03.2020
(51) Int. Cl.: H02K 7/00, H02K 15/16, H02K 7/116

(54) **MOTORISATION ELECTRIQUE ET PROCEDE D'USINAGE DE CARTER**

(30) Priorité: 22.03.2019 FR 1902982
(71) Demandeur: RENAULT s.a.s., 92100 Boulogne-Billancourt (FR)
(72) Inventeur: LALOS, Cédric, 78920 Ecquevilly (FR); MARCHAL, Nicolas, 78330 Le Fleury (FR)

(57) **Abrégé**

Motorisation électrique, comprenant une machine électrique de traction logée dans un premier carter (2), dont l'arbre de sortie (4) est accouplé par une liaison cannelée avec un arbre d'entrée (5) d'un réducteur logé dans un deuxième carter (3), motorisation dans laquelle le centrage des deux carters est assuré par des surfaces de centrage complémentaires (2c, 3c) de chaque carter et l'étanchéité des carters est assurée par des joints (7) portant sur les carters, caractérisée en ce que la portée de centrage (2c) d'un des carters sur l'autre a le même diamètre que sa portée de joint d'étanchéité (2b).

## Description

La présente invention se rapporte au domaine des motorisations électriques pour véhicule automobile.

Plus précisément, elle a pour objet une motorisation électrique, comprenant une machine électrique de traction logée dans un premier carter, dont l'arbre de sortie est accouplé par une liaison cannelée avec un arbre d'entrée d'un réducteur logé dans un deuxième carter. Le centrage des deux carters est assuré par des surfaces de centrage complémentaires de chaque carter, et l'étanchéité des carters est assurée par des joints portant sur les carters.

L'invention a également pour objet un procédé d'usinage d'un carter de motorisation électrique comprenant une machine électrique de traction logée dans un premier carter, dont l'arbre de sortie est accouplé par une liaison cannelée avec un arbre d'entrée d'un réducteur logé dans un deuxième carter.

A la différence des motorisations thermiques, les motorisations électriques de véhicule routier ne comportent pas d'embrayage de coupure entre l'arbre de sortie de la machine de traction et l'arbre d'entrée de la transmission, qui est le plus souvent un simple réducteur à rapport de transmission unique, de sorte que les deux arbres sont accouplés directement et en permanence l'un avec l'autre. Cette disposition simplifie l'architecture globale de la motorisation, mais se traduit par une perte de flexibilité, pour l'accouplement entre la machine et le réducteur.

Cet accouplement s'effectue par exemple entre un arbre rotor mâle cannelé, côté machine électrique, qui vient s'insérer dans un arbre primaire cannelé femelle, côté réducteur. L'inverse est également possible. Dans les deux cas, les cannelures sont conçues pour fonctionner sur leurs flancs. Leur rôle fonctionnel est uniquement de transmettre du couple, et elles ne doivent en aucun cas servir de centreur entre les deux arbres.

Dans ces conditions, l'axialité, des deux arbres ne peut pas être assurée au niveau de leur liaison d'emmanchement. Pour éviter les problèmes de bruyance, de défaillance prématurée des roulements, ou d'usure des cannelures, il est nécessaire de recourir à d'autres moyens pour assurer leur centrage.

Pour amortir les mouvements radiaux entre les arbres et supprimer leurs défauts angulaires d'accouplement, on peut recourir à une pièce intermédiaire d'accouplement entre les deux arbres. Cette solution est coûteuse, et trop encombrante pour des accouplements de motorisation électrique.

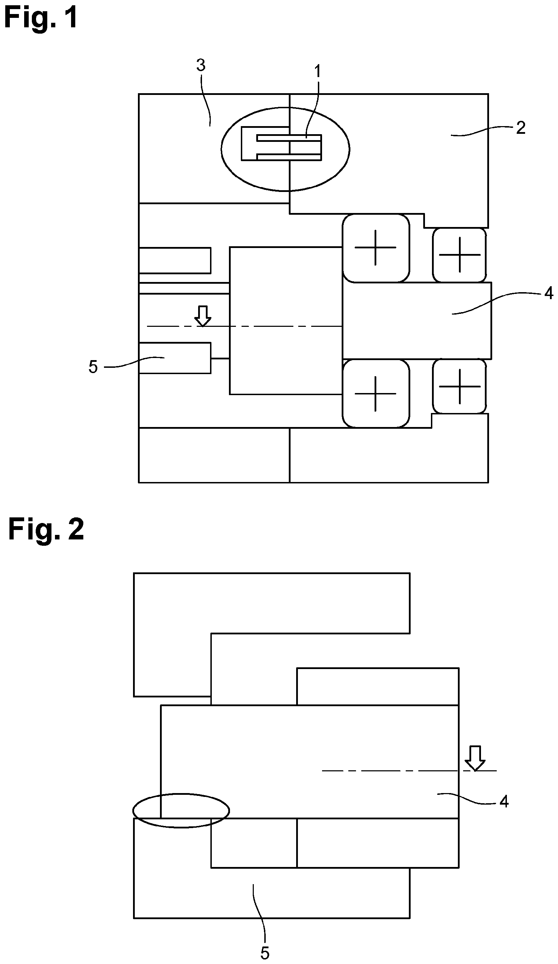

Le centrage des arbres peut aussi être recherché en introduisant des pions cylindriques, dans les carters Dans l'exemple illustré par la figure 1, les pions 1 sont frettés dans le carter 2, au niveau de la face de couture des deux carters 2, 3. Ils pénètrent dans des perçages de diamètre supérieur dans l'autre carter 3, où ils disposent d'un jeu de centrage. Ces aménagements sont faciles à réaliser, mais les pions sont toujours éloignés des axes des arbres. Il est difficile de les positionner avec précision par rapport à ces axes, car il faut toujours retourner les carters entre l'opération d'usinage des logements de pions, et l'opération d'usinage des logements de roulements.

En réalisant des portées de centrage sur les arbres eux-mêmes, comme sur la figure 2, on peut aussi améliorer considérablement leur alignement, au risque cependant d'introduire dans la liaison un hyperstatisme générant des problèmes d'usure prématurée des roulements, qui rendent ce type de mesure inapplicable.

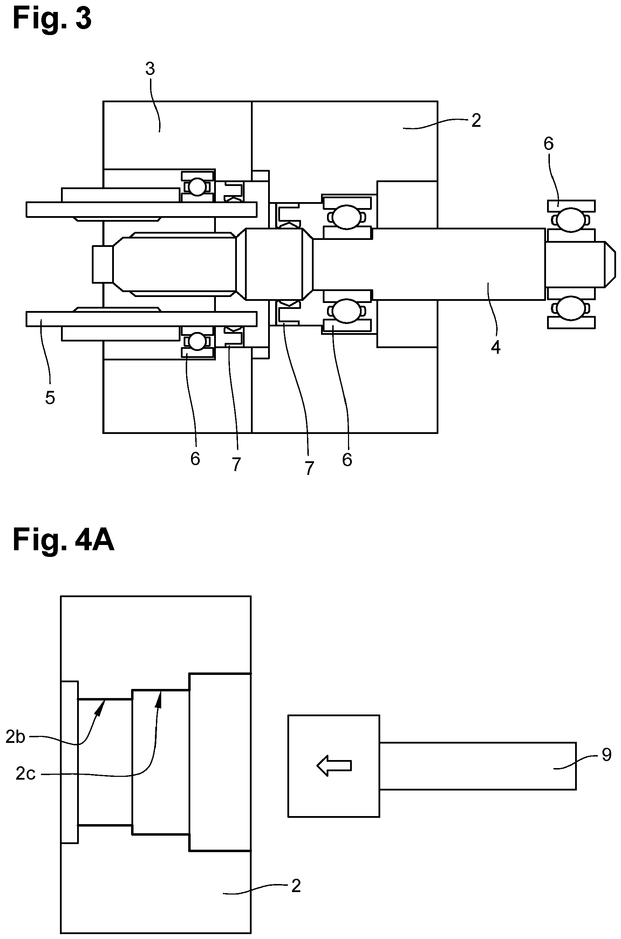

Le centrage des carters par les nez de carters, est encore une autre solution, illustrée par la figure 3. Le carter de machine électrique 2 est toujours à droite. Sur ce schéma, l'arbre de sortie 4 de la machine est mâle, et l'arbre d'entrée du réducteur 5 est femelle. On voit les roulements 6 de chaque ligne dans leurs carters respectif, et les bagues à lèvres 7, assurant l'étanchéité des carters. Ce montage permet d'obtenir un centrage plus précis que les pions de la figure 2, car la distance entre le diamètre de centrage et les axes à aligner est réduite.

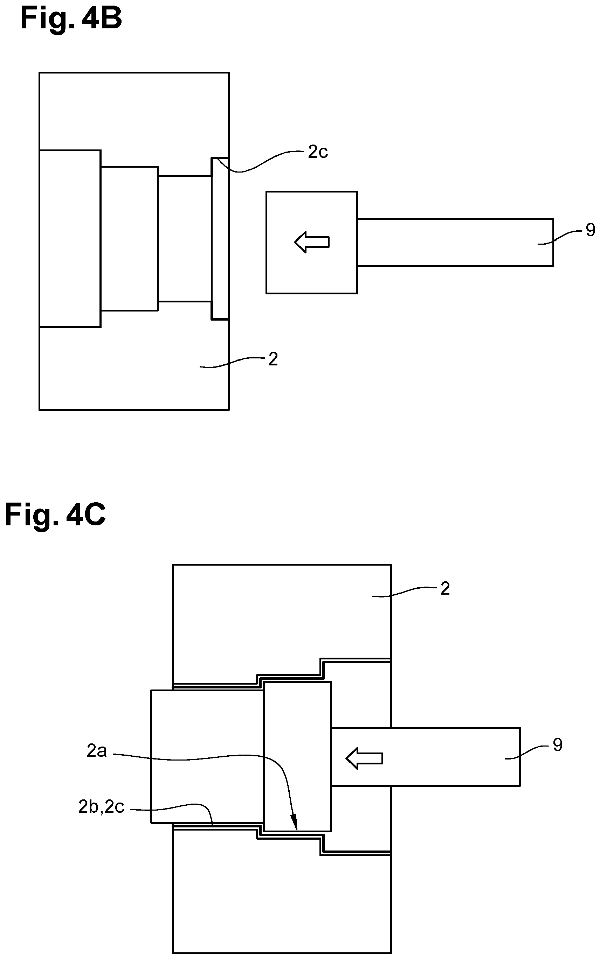

L'usinage du carter de machine électrique 2 de la figure 3 avec la fraise 9, s'effectue en deux étapes :
- étape 1 (cf. figure 4A), usinage de la partie droite du carter (portée de roulement 2a, portée de bague à lèvres 2b),
- étape 2 (cf. figure 4B), usinage de la portée de centrage 2c, après retournement.

Le retournement du carter sur la machine d'usinage, pose un problème de précision, car la localisation des surfaces issues de la deuxième étape, perdent en précision de localisation (environ 0,055mm selon les tests) par rapport aux surfaces usinées dans la première étape.

La présente invention vise à se prémunir de cette imprécision lors de l'usinage des nez de carter.

Dans ce but, elle propose que la portée de centrage d'un des carters sur l'autre, ait le même diamètre que sa portée de joint d'étanchéité.

Dans un mode de réalisation particulier de l'invention, l'arbre de sortie de la machine électrique est un arbre mâle, venant s'insérer dans un arbre d'entrée femelle du réducteur.

Conformément à l'invention, on effectue en un même passage de fraise dans un des carters, l'usinage d'une portée cylindrique femelle de centrage sur l'autre carter et l'usinage d'une portée cylindrique de roulement de diamètre supérieur à la portée de centrage.

D'autres caractéristiques et avantages de la présente invention ressortiront clairement de la lecture suivante d'un mode de réalisation non limitatif de celle-ci, en se reportant aux dessins annexés.
[Fig. 1] illustre un premier mode de centrage.
[Fig. 2] illustre un deuxième mode de centrage.
[Fig. 3] illustre un troisième mode de centrage.
[Fig. 4A] montre l'usinage du carter de machine électrique de la figure 3.
[Fig. 4B] ] montre l'usinage du carter de machine électrique de la figure 3.
[Fig. 5] illustre l'invention.

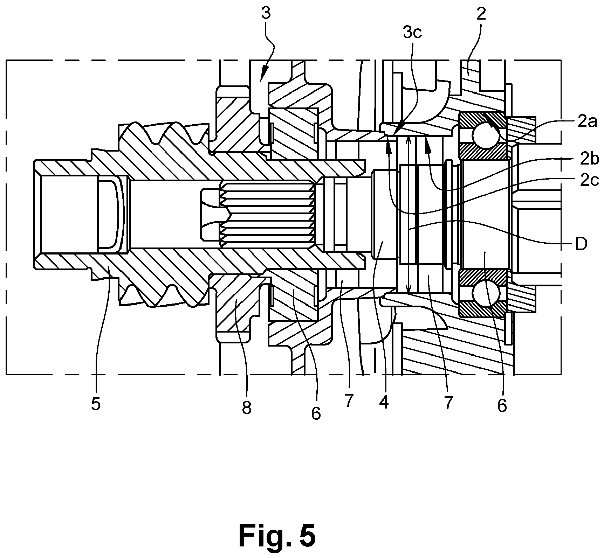

[Fig. 4C] illustre l'usinage du carter de machine électrique de la figure 5.

Sur la figure 5, on retrouve à droite la machine électrique avec son carter 2 et son arbre de sortie mâle 4, et à gauche le réducteur avec son carter 3 et son arbre primaire (arbre d'entrée) femelle 5. La motorisation électrique, comprend une machine électrique de traction logée dans un premier carter 2, dont l'arbre de sortie 4 est accouplé par une liaison cannelée avec un arbre d'entrée 5 d'un réducteur logé dans un deuxième carter 3. Le centrage des deux carters est assuré par des surfaces de centrage complémentaires 2c, 3c de chaque carter. et l'étanchéité des carters est assurée par des joints portant 7 sur les carters 2, 3, sous la forme de bagues à lèvres. L'arbre 4 de la machine 2 est supporté par un roulement6. Côté réducteur, on voit aussi un roulement 6, et la roue de parking 8. Le joint 7 de la machine électrique est disposé entre l'arbre 4 et la surface de centrage 2c du carter de machine 2 sur le carter de réducteur 3. La portée de joint 7 de la machine 2 a le même diamètre D que sa portée de joint. Ce diamètre est confondu avec la portée de joint dynamique de la machine électrique . Il est beaucoup plus proche de celui des arbres, que sur la figure 3. Conformément à l'invention, la portée de centrage d'un des carters (ici le carter de machine) sur l'autre, a le même diamètre que sa portée de joint d'étanchéité. Dans l'exemple décrit, l'arbre de sortie de la machine électrique est un arbre mâle venant s'insérer dans un arbre d'entrée femelle du réducteur, mais l'invention s'applique également à la disposition inverse, à savoir une sortie de machine par un arbre femelle et une entrée de réducteur par un arbre mâle.

Dans l'exemple non limitatif illustré par la figure 5, l'arbre de sortie de la machine électrique est un arbre mâle 4 venant s'insérer dans un arbre d'entrée femelle 5 du réducteur. Le carter de machine électrique 2 a une portée de centrage 2c femelle, et le carter de réducteur 3 a une portée de centrage mâle 3c. Sans sortir du cadre de l'invention, la disposition des portées de centrage peut aussi être inversée, avec une portée de centrage mâle sur le carter de machine et une portée de centrage femelle sur le carter de réducteur. Dans les deux cas, l'optimisation de l'usinage est assurée sur l'un des deux carters, la portée de centrage confondue avec la portée de joint, étant une portée femelle. Par ailleurs, le carter de la machine électrique présente une portée de roulement de diamètre supérieur à sa portée de centrage.

L'avantage de cette architecture, est qu'elle permet d'usiner la portée de centrage en même temps que la portée de roulement, c'est-à-dire au même passage de la fraise 9, sans avoir à retourner le carter. Le nouveau procédé d'usinage est illustré par la figure 4C. On effectue ainsi par un même passage de fraise dans un des carters, l'usinage d'une portée cylindrique femelle de centrage et de portée de joint 2b, 2c, et l'usinage d'une portée cylindrique de roulement 2a, de diamètre supérieur à la portée de centrage et d'étanchéité. Dans le mode de réalisation décrit, la portée femelle de centrage et d'étanchéité, et la portée de roulement adjacente à celle-ci sont usinées dans le carter de la machine électrique. Sans sortir du cadre de l'invention, on peut aussi usiner ces deux portées dans le carter du réducteur. Dans les deux cas, la portée de centrage est usinée au même diamètre que la portée de son joint d'étanchéité, les deux portées étant dans la continuité l'une de l'autre.

La localisation relative de ces deux portées est assurée avec une précision correspondant aux préconisations, d'environ 0.02mm, sans subir comme précédemment les dispersions imposées par le retournement du carter. Enfin la nouvelle localisation de la portée de centrage et de joint, convient parfaitement pour le bon fonctionnement d'une bague à lèvre.

Le bénéfice de l'invention, peut être mis en évidence à partir de calculs de chaînes de cotes sur les carters. On constate ainsi que la nouvelle architecture permet de diviser par cinq le risque d'interférences entre les cannelures des arbres accouplés.

En conclusion, le premier avantage de l'invention est d'améliorer le centrage des carters en évitant le retournement d'un carter dans la gamme d'usinage. Cette simplification de process, permet d'améliorer la précision de positionnement de la portée de roulements par rapport à la portée de centrage. Par ailleurs, cette nouvelle méthode permet de supprimer un passage de fraise, en usinant simultanément, avec une fraise étagée, la portée de roulement et la surface de centrage faisant office de portée de joint.

## Revendications

1. Motorisation électrique, comprenant une machine électrique de traction logée dans un premier carter (2), dont l'arbre de sortie (4) de la machine électrique est un arbre mâle venant s'insérer dans un arbre d'entrée femelle (5) d'un réducteur logé dans un deuxième carter (3), motorisation dans laquelle les deux arbres (4, 5) sont accouplés par une liaison cannelée, le centrage des deux carters (2, 3) est assuré par des surfaces de centrage complémentaires (2c, 3c) de chaque carter, et l'étanchéité des carters est assurée par des joints (7) portant sur les carters, **caractérisée en ce que** la portée de centrage (2c) d'un des carters (2) sur l'autre a le même diamètre (D) que sa portée de joint d'étanchéité (2b).

2. Motorisation électrique selon la revendication 1, **caractérisé en ce que** la portée de centrage (2c) du carter de machine électrique, est une portée femelle emmanchée sur une portée mâle (3c) du carter de réducteur (3).

3. Motorisation électrique selon la revendication 1, ou 2, **caractérisée en ce que** le carter de la machine électrique (2) présente une portée de roulement (2a) de diamètre supérieur à sa portée de centrage (2c).

4. Procédé d'usinage de carter (2) d'une motorisation électrique conforme à l'une des revendications 1, 2 ou 3, **caractérisé en ce qu'**on effectue par un même passage de fraise (9) dans un des carters (2), l'usinage d'une portée cylindrique femelle de portée de joint (7) et de centrage (2b, 2c) sur un autre carter (3), et l'usinage d'une portée cylindrique de roulement (2a) de diamètre supérieur à la portée de centrage et de portée de joint (2b, 2c).

5. Procédé d'usinage selon la revendication 4, **caractérisé en ce qu'**on usine dans le carter (2) de la machine électrique, une portée cylindrique femelle de portée de joint et centrage (2c) sur le carter du réducteur (3), et une portée de roulement (2a) adjacente à la portée de centrage (2c).

6. Procédé d'usinage selon la revendication 4 ou 5, **caractérisé en ce que** la portée de centrage (2c) du carter de la machine électrique (2) est usinée au même diamètre (D) que la portée (2b) de son joint d'étanchéité (7).

7. Procédé d'usinage selon la revendication 6, **caractérisé en ce que** la portée de joint (2b) de la machine électrique est dans la continuité de sa portée de centrage (2c) sur le carter de réducteur (3).
